# EUROPEAN PATENT APPLICATION

(11) **EP 3 425 986 A1**
(43) Date of publication of application: **09.01.2019**
(21) Application number: 16894893.3
(22) Date of filing: 24.03.2016
(51) Int. Cl.: H04W 72/12

(54) **BLIND DETECTION METHOD AND APPARATUS FOR PHYSICAL DOWNLINK CONTROL CHANNEL**

(71) Applicant: Huawei Technologies Co., Ltd., Longgang District Shenzhen, Guangdong 518129 (CN)
(72) Inventor: YOU, Chunhua, Shenzhen Guangdong 518129 (CN); HUANG, Qufang, Shenzhen Guangdong 518129 (CN)
(74) Representative: Epping - Hermann - Fischer
(86) International application number: PCT/CN2016/077244
(87) International publication number: WO 2017/161538

(57) **Abstract**

A method for blindly detecting a physical downlink control channel and an apparatus are provided. The method includes: obtaining, by user equipment UE, configuration information sent by a base station, where the configuration information indicates a first cell in which downlink control information DCI does not need to be blindly detected and a second cell in which the DCI needs to be blindly detected in serving cells corresponding to the UE; and receiving, by the user equipment, the DCI sent by the base station in the second cell, and performing uplink transmission in the first cell based on the received DCI. The solution provided in the present invention resolves a prior-art problem that a quantity of PDCCH blind detections in an LTE system increases, and consequently hardware capabilities of many UEs cannot meet a communication requirement.

## Description

### TECHNICAL FIELD

The present invention relates to the field of communications technologies, and in particular, to a method for blindly detecting a physical downlink control channel and an apparatus.

### BACKGROUND

During downlink transmission, user equipment (User equipment, UE for short) does not know a time when downlink data arrives, and therefore blindly detects a physical downlink control channel (Physical Downlink Control Channel, PDCCH for short) based on different downlink control information (Downlink control information, DCI for short) formats by using a cell radio network temporary identifier (Cell Radio Network Temporary Identifier, C-RNTI for short), to learn whether there is downlink unicast data. A blind detection area of a physical downlink control channel (Physical Downlink Control Channel, PDCCH for short) includes a common search space and a specific search space. The common search difference mainly includes a system message, a paging (paging) message, a random access response message for random access, and the like. The specific search space includes unicast data that is sent only to one specific UE. A maximum quantity of blind detections is 32, one of DCI 0/1A and DCI (1, 2, 2A, 2B, 2C, or 1D) is used for the blind detections, and a specific DCI format in the DCI (1, 2, 2A, 2B, 2C, or 1D) that is to be used depends on a transmission mode.

To increase a throughput, the 3rd Generation Partnership Project (3rd Generation Partnership Project, 3GPP for short) introduces Beyond 5CC (Beyond 5CC, B5C for short), that is, 32CC carrier aggregation, into a Long Term Evolution (Long Term Evolution, LTE for short) system. A quantity of PDCCH blind detections greatly increases. When there is no uplink multiple-input multiple-output (Multiple-Input Multiple-Output, MIMO for short), a quantity of blind detections reaches 32×32=1024. When there is uplink MIMO, a quantity of blind detections reaches 48×32=1536. Therefore, a quantity of PDCCH blind detections in the LTE system increases, and consequently hardware capabilities of many UEs cannot meet a communication requirement.

### SUMMARY

The present invention provides a method for blindly detecting a physical downlink control channel and an apparatus. The method and apparatus provided in the present invention are to resolve a prior-art problem that a quantity of PDCCH blind detections in an LTE system increases, and consequently hardware capabilities of many UEs cannot meet a communication requirement.

According to a first aspect, a method for blindly detecting a physical downlink control channel, including:
obtaining, by user equipment UE, configuration information sent by a base station, where the configuration information indicates a first cell in which downlink control information DCI does not need to be blindly detected and a second cell in which the DCI needs to be blindly detected in serving cells corresponding to the UE; and
receiving, by the user equipment, the DCI sent by the base station in the second cell, and performing uplink transmission in the first cell based on the received DCI.

With reference to the first aspect, in a first possible implementation, the obtaining, by user equipment UE, configuration information sent by a base station includes:
obtaining, by using a Media Access Control MAC message or a radio resource control RRC message, the configuration information sent by the base station in a unicast or broadcast manner.

With reference to the first possible implementation of the first aspect, in a second possible implementation, the obtaining, by user equipment UE, configuration information sent by a base station includes:
obtaining, by the UE, the configuration information from cell index information in the RRC message or a Media Access Control control element MAC CE in the MAC message.

With reference to the second possible implementation of the first aspect, in a third possible implementation, when the configuration information is obtained from the MAC CE, and the serving cells do not include a primary serving cell PCell, the configuration information includes:
a reserved bit used to indicate whether the MAC CE is used to indicate blind detection in a cell; and
a plurality of fixed bits, where each fixed bit corresponds to each of the serving cells, and if the MAC CE is used to indicate blind detection in a cell, each fixed bit is used to indicate whether the DCI needs to be blindly detected in the corresponding cell.

With reference to the second possible implementation of the first aspect, in a fourth possible implementation, when the configuration information is obtained from the MAC CE, and the serving cells do not include a PCell, the obtaining, by user equipment UE, configuration information sent by a base station includes:
determining a quantity of occurrences of the MAC CE in a Media Access Control protocol data unit MAC PDU, and determining, based on the quantity of occurrences, whether the MAC CE is used to indicate blind detection in a cell, where a bit corresponding to each of the serving cells in the MAC CE is used to indicate whether the DCI needs to be blindly detected in the corresponding cell.

With reference to the second possible implementation of the first aspect, in a fifth possible implementation, when the configuration information is obtained from the MAC CE, and the serving cells include a PCell, the obtaining, by user equipment UE, configuration information sent by a base station includes:
determining a quantity of occurrences of the MAC CE in a MAC PDU, and determining, based on the quantity of occurrences, whether the MAC CE is used to indicate blind detection in a cell, where a fixed bit corresponding to each of the serving cells in the MAC CE is used to indicate whether the DCI needs to be blindly detected in the corresponding cell, and a value of a reserved bit in the MAC CE is used to indicate whether the DCI is to be blindly detected in the PCell.

According to a second aspect, a method for blindly detecting a physical downlink control channel, including:
sending, by a base station, configuration information to UE, where the configuration information is used to indicate a first cell in which downlink control information DCI does not need to be blindly detected and a second cell in which the DCI needs to be blindly detected in serving cells corresponding to the UE; and
sending, by the base station, the DCI to the UE in the second cell, so that the UE performs uplink transmission in the first cell based on the received DCI.

With reference to the second aspect, in a first possible implementation, the sending, by a base station, configuration information to UE includes:
sending the configuration information to the UE by adding the configuration information to a Media Access Control control element MAC CE message or cell index information in a radio resource control RRC message.

With reference to the first possible implementation of the second aspect, in a second possible implementation, when the serving cells do not include a PCell, the adding the configuration information to a Media Access Control control element MAC CE message includes:
adding, to a reserved bit in the MAC CE, information used to indicate whether the MAC CE indicates blind detection in a cell; and
establishing a correspondence between each of the serving cells and each fixed bit in the MAC CE, where a value of each fixed bit in the MAC CE is used to indicate whether the DCI needs to be blindly detected in the corresponding cell.

With reference to the first possible implementation of the second aspect, in a third possible implementation, when the serving cells do not include a PCell, the adding the configuration information to a Media Access Control control element MAC CE message includes:
storing one or more same MAC CEs in a Media Access Control protocol data unit MAC PDU based on whether the MAC CE is used to indicate blind detection in a cell; and
establishing a correspondence between each of the serving cells and each bit in the MAC CE, where a value of each bit in the MAC CE is used to indicate whether the DCI needs to be blindly detected in the corresponding cell.

With reference to the first possible implementation of the second aspect, in a fourth possible implementation, when the serving cells include a PCell, the adding the configuration information to a Media Access Control control element MAC CE message includes:
storing one or more same MAC CEs in a Media Access Control protocol data unit MAC PDU based on whether the MAC CE is used to indicate blind detection in a cell; and
establishing a correspondence between each of the serving cells and each bit in the MAC CE, where a value of each fixed bit in the MAC CE is used to indicate whether the DCI needs to be blindly detected in a corresponding cell, and a value of a reserved bit in the MAC CE is used to indicate whether the DCI is to be blindly detected in the PCell.

According to a third aspect, user equipment is provided, including:
a receiver, configured to: receive configuration information sent by a base station, and receive the downlink control information DCI sent by the base station in a second cell, where the configuration information indicates a first cell in which the DCI does not need to be blindly detected and the second cell in which the DCI needs to be blindly detected in serving cells corresponding to the UE; and
a processor, configured to perform uplink transmission in the first cell based on the received DCI.

With reference to the third aspect, in a first possible implementation, the receiver is specifically configured to receive a Media Access Control MAC message or a radio resource control RRC message sent by the base station; and
the processor is further configured to obtain, from the MAC message or the RRC message, the configuration information sent by the base station.

With reference to the first possible implementation of the third aspect, in a second possible implementation, the processor is specifically configured to obtain the configuration information from cell index information in the RRC message or a Media Access Control control element MAC CE in the MAC message.

With reference to the second possible implementation of the third aspect, in a third possible implementation, when the configuration information is obtained from the MAC CE, and the serving cells do not include a primary serving cell PCell, the processor is specifically configured to: determine, based on a reserved bit in the received MAC CE, whether the MAC CE is used to indicate blind detection in a cell; and if the MAC CE is used to indicate blind detection in a cell, determine, based on a fixed bit corresponding to each of the serving cells in the MAC CE, the first cell in which the DCI does not need to be blindly detected and the second cell in which the DCI needs to be blindly detected.

With reference to the second possible implementation of the third aspect, in a fourth possible implementation, when the configuration information is obtained from the MAC CE, and the serving cells do not include a PCell, the processor is specifically configured to:
determine a quantity of occurrences of the MAC CE in a Media Access Control protocol data unit MAC PDU; determine, based on the quantity of occurrences, whether the MAC CE is used to indicate blind detection in a cell; and if the MAC CE is used to indicate blind detection in a cell, determine, based on a bit corresponding to each of the serving cells in the MAC CE, the first cell in which the DCI does not need to be blindly detected and the second cell in which the DCI needs to be blindly detected.

With reference to the second possible implementation of the third aspect, in a fifth possible implementation, when the configuration information is obtained from the MAC CE, and the serving cells include a PCell, the processor is specifically configured to: determine a quantity of occurrences of the MAC CE in a MAC PDU; determine, based on the quantity of occurrences, whether the MAC CE is used to indicate blind detection in a cell; and if the MAC CE is used to indicate blind detection in a cell, determine, based on a fixed bit corresponding to each of the serving cells in the MAC CE, the first cell in which the DCI does not need to be blindly detected and the second cell in which the DCI needs to be blindly detected, where a value of a reserved bit in the MAC CE is used to indicate whether the DCI is to be blindly detected in the PCell.

According to a fourth aspect, a base station is provided, including:
a processor, configured to generate configuration information, where the configuration information is used to indicate a first cell in which downlink control information DCI does not need to be blindly detected and a second cell in which the DCI needs to be blindly detected in serving cells corresponding to the UE, and the DCI is used to indicate uplink transmission of the UE; and
a transmitter, configured to: send the configuration information to the UE, and send the DCI to the UE in the second cell, so that the UE performs uplink transmission in the first cell based on the received DCI.

With reference to the fourth aspect, in a first possible implementation, the processor is specifically configured to add the configuration information to a Media Access Control control element MAC CE message or cell index information in a radio resource control RRC message.

With reference to the first possible implementation of the fourth aspect, in a second possible implementation, when the serving cells do not include a PCell, the processor is specifically configured to: add, to a reserved bit in the MAC CE, information used to indicate whether the MAC CE indicates blind detection in a cell; and establish a correspondence between each of the serving cells and each fixed bit in the MAC CE, where a value of each fixed bit is used to indicate whether the DCI needs to be blindly detected in the corresponding cell.

With reference to the first possible implementation of the fourth aspect, in a third possible implementation, when the serving cells do not include a PCell, the processor is specifically configured to: store one or more same MAC CEs in a Media Access Control protocol data unit MAC PDU based on whether the MAC CE is used to indicate blind detection in a cell; and establish a correspondence between each of the serving cells and each bit in the MAC CE, where a value of each bit in the MAC CE is used to indicate whether the DCI needs to be blindly detected in the corresponding cell.

With reference to the first possible implementation of the fourth aspect, in a fourth possible implementation, when the serving cells include a PCell, the processor is specifically configured to: store one or more same MAC CEs in a Media Access Control protocol data unit MAC PDU based on whether the MAC CE is used to indicate blind detection in a cell; and establish a correspondence between each of the serving cells and each fixed bit in the MAC CE, where a value of each fixed bit is used to indicate whether the DCI needs to be blindly detected in a corresponding cell, and a value of a reserved bit in the MAC CE is used to indicate whether the DCI is to be blindly detected in the PCell.

According to a fifth aspect, a method for blindly detecting a physical downlink control channel, including:
receiving, by user equipment UE, indication information that indicates a transmission mode change and that is sent by a base station, and starting to blindly detect DCI 0/1A; and
after it is determined that the user equipment completes the transmission mode change, stopping blindly detecting the DCI 0/1A.

With reference to the fifth aspect, in a first possible implementation, the stopping blindly detecting the DCI 0/1A after it is determined that the user equipment completes the transmission mode change includes:
making, by the UE, the transmission mode change based on the indication information, and sending a reconfiguration complete message to the base station after completing the transmission mode change, so as to notify the base station that the transmission mode change succeeds; and
after receiving feedback information from the base station for the reconfiguration complete message, stopping blindly detecting the DCI 0/1A.

According to a sixth aspect, user equipment is provided, including:
a receiver, configured to receive indication information that indicates a transmission mode change and that is sent by a base station; and
a processor, configured to: after the indication information is received, start to blindly detect DCI 0/1A; and after it is determined that the transmission mode change is completed, stop blindly detecting the DCI 0/1A.

With reference to the sixth aspect, in a first possible implementation, the user equipment further includes:
a transmitter, configured to send a reconfiguration complete message to the base station after the electronic device completes the transmission mode change, so as to notify the base station that the transmission mode change succeeds; and
the processor is specifically configured to: after feedback information for the reconfiguration complete message is received from the base station, stop blindly detecting the DCI 0/1A.

One or two of the foregoing technical solutions have at least the following technical effects:

In the solutions provided in the embodiments of the present invention, the UE blindly detects DCI only in some configured cells, and then performs, by using a result of blind detection in a cell in which the DCI needs to be blindly detected, uplink data transmission in a cell in which the DCI does not need to be blindly detected. According to the method provided in the embodiments of the present invention, regardless of an adjusted quantity of serving cells corresponding to the UE, uplink data transmission may be implemented by setting a cell in which blind detection is performed, thereby resolving a prior-art problem that a quantity of PDCCH blind detections in LTE increases, and consequently hardware capabilities of many UEs cannot meet a communication requirement. In addition, during implementation of the solutions of the present invention, a hardware structure of the UE does not need to be adjusted, and therefore the solutions are easy to be implemented.

### BRIEF DESCRIPTION OF DRAWINGS

FIG. 1 is a schematic flowchart of a method for blindly detecting a physical downlink control channel according to an embodiment of the present invention;
FIG. 2a and FIG. 2b are schematic structural diagrams of using a MAC CE to indicate whether blind detection is to be performed in each cell according to an embodiment of the present invention;
FIG. 3 is a schematic structural diagram of a specific example of using a MAC CE to indicate whether blind detection is to be performed in a cell according to an embodiment of the present invention;
FIG. 4 is a schematic flowchart of another method for blindly detecting a physical downlink control channel according to an embodiment of the present invention;
FIG. 5 is a schematic flowchart of another method for blindly detecting a physical downlink control channel according to an embodiment of the present invention;
FIG. 6 is a schematic structural diagram of user equipment according to an embodiment of the present invention; and
FIG. 7 is a schematic structural diagram of a base station according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The following further describes the embodiments of the present invention in detail with reference to the accompanying drawings in this specification.

### Embodiment 1

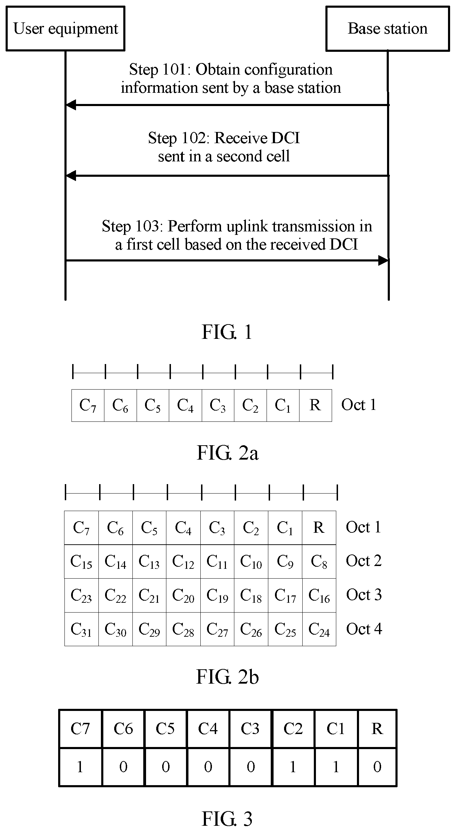

As shown in FIG. 1, this embodiment of the present invention provides a method for blindly detecting a physical downlink control channel, and the method specifically includes the following steps.

In this embodiment, a quantity of serving cells corresponding to user equipment (User equipment, UE) in an LTE system increases, and great data processing pressure is exerted on a device if blind detection is performed in each serving cell by using a plurality of DCI formats. Therefore, as the LTE system develops, there are some serving cells in which DCI 0/1A does not need to be blindly detected. However, uplink data transmission cannot be performed in a cell in which DCI 0/1A is not blindly detected. In this embodiment of the present invention, the DCI 0/1A of the cells in which the DCI 0/1A does not need to be blindly detected may be sent by using another cell in which blind detection needs to be performed, to ensure that normal data transmission is performed in the cells in which the DCI 0/1A is not blindly detected. According to this implementation principle, this embodiment of the present invention provides the following specific implementation steps.

Step 101: UE obtains configuration information sent by a base station, where the configuration information indicates a first cell in which downlink control information DCI does not need to be blindly detected and a second cell in which the DCI needs to be blindly detected in serving cells corresponding to the UE.

In this embodiment, the serving cells corresponding to the UE are classified into two types. One type is a cell in which DCI 0/1A needs to be blindly detected, and the other type is a cell in which DCI 0/1A does not need to be blindly detected. The configuration information received by the UE indicates types of all cells in the serving cells.

In this embodiment, the base station may send the configuration information to the UE in a plurality of manners. An optimal implementation is: obtaining, by using a Media Access Control (Media Access Control Layer, MAC) message or a radio resource control (Radio Resource Control, RRC) message, the configuration information sent by the base station in a unicast or broadcast manner.

Optionally, to reuse original information of the base station to reduce information modification to the greatest extent, the UE may obtain the configuration information from cell index information in the RRC message or a Media Access Control control element (Medium Access Control Layer control element, MAC CE) in the MAC message.

Step 102: The user equipment receives the DCI sent by the base station in the second cell.

Step 103: Perform uplink transmission in the first cell based on the received DCI.

Optionally, in this embodiment, for instructing the UE to receive the DCI in the second cell of the base station, a cell in which the DCI is to be sent may be set for the UE in advance, or the UE receives, before receiving the DCI sent by the base station in the second cell, second configuration information sent by the base station by using an RRC message. The second configuration information is used to configure the UE to perform cross-carrier scheduling on the first cell in the second cell, so as to perform steps 102 and 103.

After receiving the configuration information, the UE may determine the first cell and the second cell in the serving cells, and perform blind detection in the second cell, so as to indicate uplink data transmission in the first cell based on DCI 0/1A blindly detected in the second cell.

Optionally, if in the serving cells corresponding to the UE, DCI 0/1A does not need to be blindly detected in a secondary serving cell SCell, and the DCI 0/1A needs to be blindly detected in a cell PCell, the UE may blindly detect the DCI 0/1A of the secondary serving cell SCell in the cell PCell, and then perform uplink data transmission in the SCell based on a result of the blind detection in the cell PCell. In other words, the UE blindly detects a PDCCH of the PCell to indicate PDSCH data of the SCell.

Optionally, there are a plurality of specific implementations when the UE obtains the configuration information from the MAC CE. The following provides several optimal manners:

### I. Reusing an original MAC CE format:

A quantity of cells that need to be indicated by the MAC CE when the serving cells corresponding to the UE include a primary serving cell (Pcell) is different from a quantity of cells that need to be indicated by the MAC CE when the serving cells do not include a PCell. Therefore, a manner of obtaining the configuration information from the MAC CE includes the following several cases based on whether the serving cells include the PCell.
1. When the serving cells do not include the PCell, there are two implementations in which the configuration information indicates whether blind detection is to be performed in a cell.

Manner 1: The configuration information includes a reserved bit and a plurality of fixed bits.

The reserved bit is used to indicate whether the MAC CE is used to indicate blind detection in a cell.

Each of the plurality of fixed bits corresponds to each of the serving cells, and if the MAC CE is used to indicate blind detection in a cell, each fixed bit is used to indicate whether the DCI needs to be blindly detected in the corresponding cell.

In this embodiment, that the UE determines, based on the configuration information, the first cell in which the downlink control information DCI does not need to be blindly detected and the second cell in which the DCI needs to be blindly detected in the corresponding serving cells includes the following steps:
A1. Determine, based on a reserved bit in the received MAC CE, whether the MAC CE is used to indicate blind detection in a cell.
A2. If the MAC CE is used to indicate blind detection in a cell, determine, based on a fixed bit corresponding to each of the serving cells in the MAC CE, the first cell in which the DCI does not need to be blindly detected and the second cell in which the DCI needs to be blindly detected.

Because systems are different, quantities of serving cells corresponding to the UE are different. If a quantity of secondary serving cells for carrier aggregation is less than or equal to 7, the UE corresponds to a maximum of seven serving cells. A corresponding structure of the MAC CE used to indicate a blind detection status is shown in FIG. 2a. If a quantity of secondary serving cells for carrier aggregation is greater than 7, a structure of the MAC CE is shown in FIG. 2b.

For example, when the reserved bit is 1, the MAC CE is of an original meaning. When the reserved bit is 0, the MAC CE is used to indicate whether blind detection is to be performed in each of the serving cells. The fixed bits (that is, other bits than the reserved bit) in the MAC CE are used to indicate whether DCI 0/1A is to be blindly detected in the cells in the serving cells. When a value of a fixed bit is 1, it may indicate that the DCI 0/1A needs to be blindly detected in a cell corresponding to the fixed bit. When a value of a fixed bit is 0, it indicates that the DCI 0/1A does not need to be blindly detected in a cell corresponding to the fixed bit.

When a reserved bit (R in the figure) in a MAC CE shown in FIG. 3 is 0, it indicates that the MAC CE is used to indicate whether DCI 0/1A is to be blindly detected in each of the serving cells. Then, values corresponding to C1, C2, and C7 are 1. Therefore, the values indicate that the DCI 0/1A needs to be blindly detected in the three cells C1, C2, and C7. Uplink data transmission in other cells is performed based on results of blindly detecting the DCI 0/1A in the three cells C1, C2, and C7. An implementation shown in FIG. 3 is merely an example of an embodiment of the present invention, and the solutions provided in the embodiments of the present invention are not limited to this implementation.

Manner 2: A quantity of occurrences of one MAC CE in a Media Access Control protocol data unit (Media Access Control Layer protocol data unit, MAC PDU) indicates whether the MAC CE is used to indicate whether blind detection is to be performed in each of the serving cells. Then, each bit in the MAC CE indicates a status of each cell. In this case, that user equipment UE obtains configuration information sent by a base station includes:
determining a quantity of occurrences of the MAC CE in a Media Access Control protocol data unit MAC PDU, and determining, based on the quantity of occurrences, whether the MAC CE is used to indicate blind detection in a cell, where a bit corresponding to each of the serving cells in the MAC CE is used to indicate whether the DCI needs to be blindly detected in the corresponding cell.

In this embodiment, that the UE determines, based on the configuration information, the first cell in which the downlink control information DCI does not need to be blindly detected and the second cell in which the DCI needs to be blindly detected in the corresponding serving cells includes the following steps.

B1. Determine the quantity of occurrences of the MAC CE in the MAC PDU, and determine, based on the quantity of occurrences, whether the MAC CE is used to indicate blind detection in a cell.

Optionally, the quantity of occurrences of the MAC CE in the MAC PDU may be determined in the following manner: A logical channel ID of each MAC CE in the MAC PDU is detected. If there are MAC CEs having a same logical channel ID, it may be determined that one MAC CE occurs a plurality of times, so as to determine a quantity of occurrences of the MAC CE based on a quantity of MAC CEs having the same logical channel ID. In this embodiment, the MAC CE used to indicate whether blind detection is to be performed in a cell may use a redefined logical channel ID, or may reuse an original logical channel ID of the MAC CE.

B2. If the MAC CE is used to indicate blind detection in a cell, determine, based on the bit corresponding to each of the serving cells in the MAC CE, the first cell in which the DCI does not need to be blindly detected and the second cell in which the DCI needs to be blindly detected.

For example, when the UE determines that the MAC CE occurs once in the MAC PDU, the MAC CE is of an original meaning. When the MAC CE occurs twice in the MAC PDU, the MAC CE is used to indicate whether blind detection is to be performed in each of the serving cells. A bit in the MAC CE is used to indicate whether DCI 0/1A is to be blindly detected in each of the serving cells. When a value of a bit is 1, it may indicate that the DCI 0/1A needs to be blindly detected in a corresponding cell. When a value of a bit is 0, it indicates that the DCI 0/1A does not need to be blindly detected in a corresponding cell. Based on the foregoing setting, if the UE determines that the MAC CE occurs twice in the MAC PDU, it may be determined that the MAC CE is used to indicate whether blind detection is to be performed in each of the serving cells. A specific status of each cell is described in the example of Manner 1.
2. When the configuration information is obtained from the MAC CE, and the serving cells include the PCell, that user equipment UE obtains configuration information sent by a base station includes:
   determining a quantity of occurrences of the MAC CE in a MAC PDU, and determining, based on the quantity of occurrences, whether the MAC CE is used to indicate blind detection in a cell, where a fixed bit corresponding to each of the serving cells in the MAC CE is used to indicate whether the DCI needs to be blindly detected in the corresponding cell, and a value of a reserved bit in the MAC CE is used to indicate whether the DCI is to be blindly detected in the PCell.

In this embodiment, that the UE determines, based on the configuration information, the first cell in which the downlink control information DCI does not need to be blindly detected and the second cell in which the DCI needs to be blindly detected in the corresponding serving cells includes:
determining the quantity of occurrences of the MAC CE in the MAC PDU, and determining, based on the quantity of occurrences, whether the MAC CE is used to indicate blind detection in a cell; and
if the MAC CE is used to indicate blind detection in a cell, determining, based on the fixed bit corresponding to each of the serving cells in the MAC CE, the first cell in which the DCI does not need to be blindly detected and the second cell in which the DCI needs to be blindly detected, where the value of the reserved bit in the MAC CE is used to indicate whether the DCI is to be blindly detected in the PCell.

In this embodiment, the PCell is a primary serving cell and keeps in an active state. Therefore, in an original definition of the MAC CE, there is no bit used to indicate whether the primary serving cell is to be activated. When the MAC CE is used to indicate whether the DCI is to be blindly detected in a cell, in this embodiment, an original reserved Rbite bit in the MAC CE may be used to indicate information about the primary serving cell, to implement indication on the PCell.
II. Redefining a MAC CE format, and using a MAC CE in a new format to indicate whether blind detection is to be performed in a cell, where a specific implementation may be as follows:
   A specific logical channel ID is defined. If it is detected that a logical channel ID corresponding to a MAC CE is the specific logical channel ID, it may be determined that the new MAC CE is used to indicate whether blind detection is to be performed in a cell. Whether blind detection is to be performed in the serving cells corresponding to the UE is determined based on values of bits in the MAC CE in a new format. The newly-defined MAC CE format may be specifically set based on content of the configuration information. Details are not described herein.

In the solution provided in this embodiment of the present invention, the UE blindly detects DCI only in some configured cells, and then performs, by using a result of blind detection in a cell in which the DCI needs to be blindly detected, uplink data transmission in a cell in which the DCI does not need to be blindly detected. According to the method provided in this embodiment of the present invention, regardless of an adjusted quantity of serving cells corresponding to the UE, uplink data transmission may be implemented by setting a cell in which blind detection is performed, thereby resolving a prior-art problem that a quantity of PDCCH blind detections in LTE increases, and consequently hardware capabilities of many UEs cannot meet a communication requirement. In addition, during implementation of the solution of the present invention, a hardware structure of the UE does not need to be adjusted, and therefore the solution is easy to be implemented.

### Embodiment 2

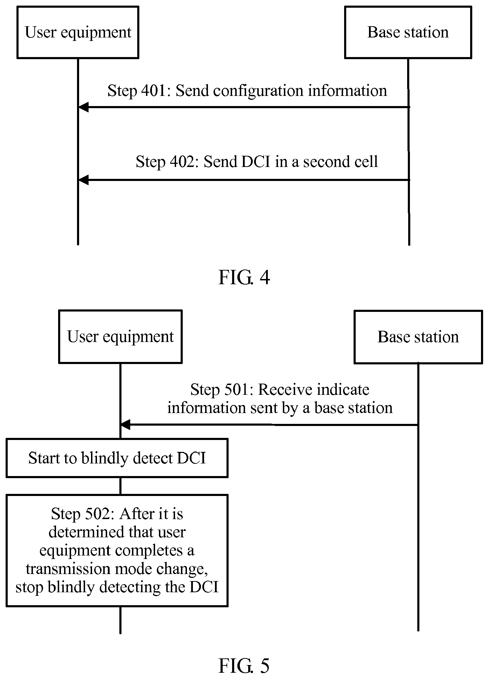

As shown in FIG. 4, based on an implementation procedure on a base station side, this embodiment of the present invention further provides another method for blindly detecting a physical downlink control channel. The method specifically includes the following steps.

Step 401: A base station sends configuration information to UE, where the configuration information is used to indicate a first cell in which downlink control information DCI does not need to be blindly detected and a second cell in which the DCI needs to be blindly detected in serving cells corresponding to the UE.

Optionally, a specific implementation in which the base station sends the configuration information to the UE may be:
sending the configuration information to the UE by adding the configuration information to a Media Access Control control element MAC CE message or cell index information in a radio resource control RRC message.

Step 402: The base station sends the DCI to the UE in the second cell, so that the UE performs uplink transmission in the first cell based on the received DCI.

There are a plurality of manners of notifying the UE of information indicating whether DCI is to be blindly detected in a cell. The following provides several optimal manners:

The configuration information may be carried by using a MAC CE. In addition, a PCell is a primary serving cell and keeps in an active state. Therefore, in an original definition of the MAC CE, there is no bit used to indicate whether the primary serving cell is to be activated. When the MAC CE is used to indicate whether DCI is to be blindly detected in a cell, there may be two cases depending on whether the serving cells include the PCell.
I. When the serving cells do not include the PCell:
   1a. The adding the configuration information to a Media Access Control control element MAC CE message includes:
      adding, to a reserved bit in the MAC CE, information used to indicate whether the MAC CE indicates blind detection in a cell; and
      establishing a correspondence between each of the serving cells and each fixed bit in the MAC CE, where a value of each fixed bit in the MAC CE is used to indicate whether the DCI needs to be blindly detected in the corresponding cell.
   1b. The adding the configuration information to a Media Access Control control element MAC CE message includes:
      storing one or more same MAC CEs in a Media Access Control protocol data unit MAC PDU based on whether the MAC CE is used to indicate blind detection in a cell; and
      establishing a correspondence between each of the serving cells and each bit in the MAC CE, where a value of each bit in the MAC CE is used to indicate whether the DCI needs to be blindly detected in the corresponding cell.
II. When the serving cells include the PCell, an original reserved Rbite bit in the MAC CE may be used to indicate information about the primary serving cell. The adding the configuration information to a Media Access Control control element MAC CE message includes:
   storing one or more same MAC CEs in a Media Access Control protocol data unit MAC PDU based on whether the MAC CE is used to indicate blind detection in a cell; and
   establishing a correspondence between each of the serving cells and each bit in the MAC CE, where a value of each fixed bit in the MAC CE is used to indicate whether the DCI needs to be blindly detected in a corresponding cell, and a value of a reserved bit in the MAC CE is used to indicate whether the DCI is to be blindly detected in the PCell.

### Embodiment 3

As shown in FIG. 5, this embodiment of the present invention further provides another method for blindly detecting a physical downlink control channel, and the method includes the following steps.

Step 501: User equipment UE receives indication information that indicates a transmission mode change and that is sent by a base station, and starts to blindly detect DCI 0/1A.

The indication information may be a physical layer message, a MAC layer message, or a connection reconfiguration (Connection Reconfiguration, RRC) message.

Step 502: After it is determined that the user equipment completes the transmission mode change, stop blindly detecting the DCI 0/1A.

Optionally, in this embodiment, a specific implementation of stopping blindly detecting the DCI 0/1A after it is determined that the user equipment completes the transmission mode change may be as follows:
The UE makes the transmission mode change based on the indication information, and sends a reconfiguration complete message to the base station after completing the transmission mode change, so as to notify the base station that the transmission mode change succeeds.

After receiving feedback information from the base station for the reconfiguration complete message, the UE stops blindly detecting the DCI 0/1A.

In this embodiment, the UE needs to blindly detect the DCI 0/1A only during the transmission mode change, and does not need to blindly detect the DCI 0/1A in other time.

### Embodiment 4

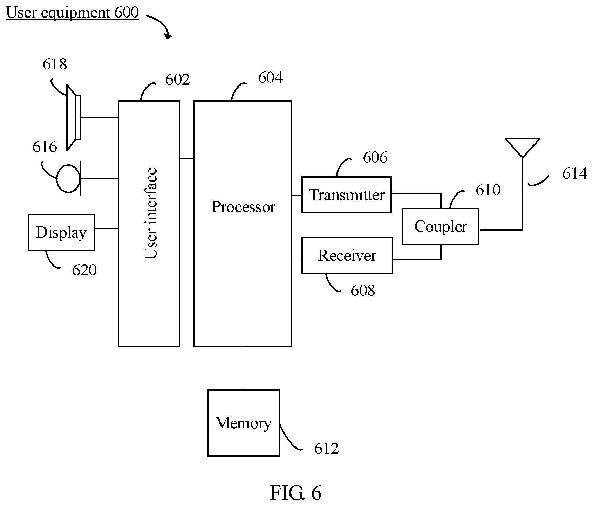

As shown in FIG. 6, user equipment (or referred to as a terminal device) 600 may include an input/output module (including an audio input/output module 618, a key input module 616, a display 620, and the like), a user interface 602, a processor 604, a transmitter 606, a receiver 608, a coupler 610, an antenna 614, and a memory 612. In some embodiments of the present invention, these components may be connected by using a bus or in another manner. A bus connection is used as an example in FIG. 6.

The antenna 614 is configured to: convert electromagnetic energy in a transmission line into an electromagnetic wave in free space, or convert an electromagnetic wave in free space into electromagnetic energy in a transmission line. The coupler 610 is configured to: divide a mobile communications signal into a plurality of signals, and allocate the signals to a plurality of receivers 608.

The transmitter 606 is configured to transmit (for example, modulate) a mobile communications signal generated by the processor 604. The receiver 608 is configured to receive (for example, demodulate) a mobile communications signal received by the antenna 614. The transmitter 606 and the receiver 608 may be considered as a wireless modem. During specific implementation, there may be one or more transmitters 606 or receivers 608.

The input/output module is mainly configured to implement an interaction function between the user equipment 600 and a user/an external environment, and mainly includes the audio input/output module 618, the key input module 616, the display 620, and the like. During specific implementation, the input/output module may further include a camera, a touchscreen, a sensor, and the like. The input/output module communicates with the processor 604 by using the user interface 602.

The memory 612 is coupled to the processor 604 and is configured to store various software programs and/or a plurality of groups of instructions. During specific implementation, the memory 612 may include a high-speed random access memory, and may also include a nonvolatile memory, such as one or more disk storage devices, a flash memory device, or another nonvolatile solid-state storage device. The processor 604 is mainly configured to: invoke the programs stored in the memory 612, and perform the following steps:

The receiver 608 is configured to: receive configuration information sent by a base station, and receive the downlink control information DCI sent by the base station in a second cell, where the configuration information indicates a first cell in which the DCI does not need to be blindly detected and the second cell in which the DCI needs to be blindly detected in serving cells corresponding to the UE.

The processor 604 is configured to perform uplink transmission in the first cell based on the received DCI.

Optionally, the receiver 608 is specifically configured to receive a Media Access Control MAC message or a radio resource control RRC message sent by the base station.

Correspondingly, the processor 604 is further configured to obtain, from the MAC message or the RRC message, the configuration information sent by the base station.

Optionally, the processor 604 is specifically configured to obtain the configuration information from cell index information in the RRC message or a Media Access Control control element MAC CE in the MAC message.

Optionally, when the configuration information is obtained from the MAC CE, and the serving cells do not include a primary serving cell PCell, the processor is specifically configured to: determine, based on a reserved bit in the received MAC CE, whether the MAC CE is used to indicate blind detection in a cell; and if the MAC CE is used to indicate blind detection in a cell, determine, based on a fixed bit corresponding to each of the serving cells in the MAC CE, the first cell in which the DCI does not need to be blindly detected and the second cell in which the DCI needs to be blindly detected.

Optionally, when the configuration information is obtained from the MAC CE, and the serving cells do not include a PCell, the processor is specifically configured to: determine a quantity of occurrences of the MAC CE in a Media Access Control protocol data unit MAC PDU; determine, based on the quantity of occurrences, whether the MAC CE is used to indicate blind detection in a cell; and if the MAC CE is used to indicate blind detection in a cell, determine, based on a bit corresponding to each of the serving cells in the MAC CE, the first cell in which the DCI does not need to be blindly detected and the second cell in which the DCI needs to be blindly detected.

Optionally, when the configuration information is obtained from the MAC CE, and the serving cells include a PCell, the processor is specifically configured to: determine a quantity of occurrences of the MAC CE in a MAC PDU; determine, based on the quantity of occurrences, whether the MAC CE is used to indicate blind detection in a cell; and if the MAC CE is used to indicate blind detection in a cell, determine, based on a fixed bit corresponding to each of the serving cells in the MAC CE, the first cell in which the DCI does not need to be blindly detected and the second cell in which the DCI needs to be blindly detected, where a value of a reserved bit in the MAC CE is used to indicate whether the DCI is to be blindly detected in the PCell.

### Embodiment 5

Based on a specific structure of the user equipment shown in FIG. 6, this embodiment of the present invention further provides another implementation solution for performing blind detection, and the implementation solution is specifically as follows:

The receiver 608 is configured to receive indication information that indicates a transmission mode change and that is sent by a base station.

The processor 604 is configured to: after the indication information is received, start to blindly detect DCI 0/1A; and after it is determined that the transmission mode change is completed, stop blindly detecting the DCI 0/1A.

Optionally, the transmitter 606 of the user equipment is configured to send a reconfiguration complete message to the base station after the electronic device completes the transmission mode change, so as to notify the base station that the transmission mode change succeeds.

Correspondingly, the processor 604 is specifically configured to: after feedback information for the reconfiguration complete message is received from the base station, stop blindly detecting the DCI 0/1A.

### Embodiment 6

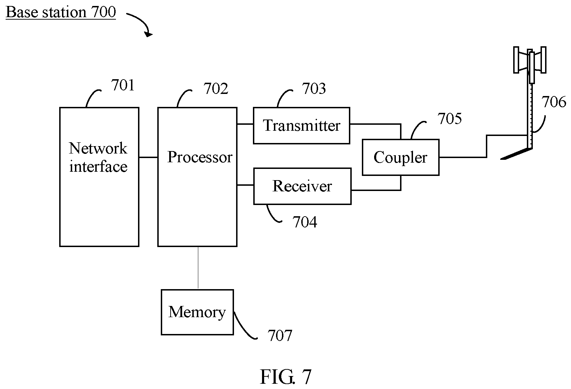

As shown in FIG. 7, this embodiment of the present invention provides a base station. A base station 700 may include a network interface 701, a processor 702, a transmitter 703, a receiver 704, a coupler 705, an antenna 706, and a memory 707. In some embodiments of the present invention, these components may be connected by using a bus or in another manner. A bus connection is used as an example in FIG. 7.

The network interface 701 is used by the base station 700 to perform data communication with user equipment (a mobile station MS in 2G, or UE in 3G and 4G). During specific implementation, the network interface 701 may include one or more of a GSM (2G) wireless network interface, a WCDMA (3G) wireless network interface, an LTE (4G) wireless network interface, and the like; or may be a future 4.5G or 5G wireless network interface.

The antenna 706 is configured to: convert electromagnetic energy in a transmission line into an electromagnetic wave in free space, or convert an electromagnetic wave in free space into electromagnetic energy in a transmission line. The coupler 705 is configured to: divide a mobile communications signal into a plurality of signals, and allocate the signals to a plurality of receivers 704.

The transmitter 703 is configured to transmit (for example, modulate) a mobile communications signal generated by the processor 702. The receiver 704 is configured to receive (for example, demodulate) a mobile communications signal received by the antenna 706. The transmitter 703 and the receiver 704 may be considered as a wireless modem. During specific implementation, there may be one or more transmitters 703 or receivers 704.

The memory 707 is configured to store program code. During specific implementation, the memory 707 may be a read only memory (Read Only Memory, ROM), and may be configured to store program code.

The processor 702 is configured to manage a radio channel, implement a call, set up and tear down a communications link, control cross-cell handover of user equipment in this control area, and so on. During specific implementation, the processor 702 may include modules such as an AM/CM module (a center for speech channel switchover and information exchange), a BM module (configured to complete call processing, signaling processing, radio resource management, radio link management, and circuit maintenance functions), and a TCSM module (configured to complete multiplexing/demultiplexing and code conversion functions). For detailed information, refer to related knowledge about mobile communications. In this embodiment of the present invention:
the processor 702 is configured to generate configuration information, where the configuration information is used to indicate a first cell in which downlink control information DCI does not need to be blindly detected and a second cell in which the DCI needs to be blindly detected in serving cells corresponding to the UE, and the DCI is used to indicate uplink transmission of the UE.

The transmitter 703 is configured to: send the configuration information to the UE, and send the DCI to the UE in the second cell, so that the UE performs uplink transmission in the first cell based on the received DCI.

Optionally, the processor 702 is specifically configured to add the configuration information to a Media Access Control control element MAC CE message or cell index information in a radio resource control RRC message.

Optionally, when the serving cells do not include a PCell, the processor 702 is specifically configured to: add, to a reserved bit in the MAC CE, information used to indicate whether the MAC CE indicates blind detection in a cell; and establish a correspondence between each of the serving cells and each fixed bit in the MAC CE, where a value of each fixed bit is used to indicate whether the DCI needs to be blindly detected in the corresponding cell.

Optionally, when the serving cells do not include a PCell, the processor 702 is specifically configured to: store one or more same MAC CEs in a Media Access Control protocol data unit MAC PDU based on whether the MAC CE is used to indicate blind detection in a cell; and establish a correspondence between each of the serving cells and each bit in the MAC CE, where a value of each bit in the MAC CE is used to indicate whether the DCI needs to be blindly detected in the corresponding cell.

Optionally, when the serving cells include a PCell, the processor 702 is specifically configured to: store one or more same MAC CEs in a Media Access Control protocol data unit MAC PDU based on whether the MAC CE is used to indicate blind detection in a cell; and establish a correspondence between each of the serving cells and each fixed bit in the MAC CE, where a value of each fixed bit is used to indicate whether the DCI needs to be blindly detected in a corresponding cell, and a value of a reserved bit in the MAC CE is used to indicate whether the DCI is to be blindly detected in the PCell.

The foregoing one or more technical solutions in the embodiments of this application have at least the following technical effects:
According to the method and apparatus provided in the embodiments of the present invention, the UE blindly detects DCI only in some configured cells, and then performs, by using a result of blind detection in a cell in which the DCI needs to be blindly detected, uplink data transmission in a cell in which the DCI does not need to be blindly detected. According to the method provided in the embodiments of the present invention, regardless of an adjusted quantity of serving cells corresponding to the UE, uplink data transmission may be implemented by setting a cell in which blind detection is performed, thereby resolving a prior-art problem that a quantity of PDCCH blind detections in LTE increases, and consequently hardware capabilities of many UEs cannot meet a communication requirement. In addition, during implementation of the solutions of the present invention, a hardware structure of the UE does not need to be adjusted, and therefore the solutions are easy to be implemented.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Apparently, a person skilled in the art can make various modifications and variations to the present invention without departing from the spirit and scope of the present invention. The present invention is intended to cover these modifications and variations provided that they fall within the scope of protection defined by the following claims and their equivalent technologies.

## Claims

1. A method for blindly detecting a physical downlink control channel, comprising:
obtaining, by user equipment UE, configuration information sent by a base station, wherein the configuration information indicates a first cell in which downlink control information DCI does not need to be blindly detected and a second cell in which the DCI needs to be blindly detected in serving cells corresponding to the UE; and
receiving, by the user equipment, the DCI sent by the base station in the second cell, and performing uplink transmission in the first cell based on the received DCI.

2. The method according to claim 1, wherein the obtaining, by user equipment UE, configuration information sent by a base station comprises:
obtaining, by using a Media Access Control MAC message or a radio resource control RRC message, the configuration information sent by the base station in a unicast or broadcast manner.

3. The method according to claim 2, wherein the obtaining, by user equipment UE, configuration information sent by a base station comprises:
obtaining, by the UE, the configuration information from cell index information in the RRC message or a Media Access Control control element MAC CE in the MAC message.

4. The method according to claim 3, wherein when the configuration information is obtained from the MAC CE, and the serving cells do not comprise a primary serving cell PCell, the configuration information comprises:
a reserved bit used to indicate whether the MAC CE is used to indicate blind detection in a cell; and
a plurality of fixed bits, wherein each fixed bit corresponds to each of the serving cells, and if the MAC CE is used to indicate blind detection in a cell, each fixed bit is used to indicate whether the DCI needs to be blindly detected in the corresponding cell.

5. The method according to claim 3, wherein when the configuration information is obtained from the MAC CE, and the serving cells do not comprise a PCell, the obtaining, by user equipment UE, configuration information sent by a base station comprises:
determining a quantity of occurrences of the MAC CE in a Media Access Control protocol data unit MAC PDU, and determining, based on the quantity of occurrences, whether the MAC CE is used to indicate blind detection in a cell, wherein a bit corresponding to each of the serving cells in the MAC CE is used to indicate whether the DCI needs to be blindly detected in the corresponding cell.

6. The method according to claim 3, wherein when the configuration information is obtained from the MAC CE, and the serving cells comprise a PCell, the obtaining, by user equipment UE, configuration information sent by a base station comprises:
determining a quantity of occurrences of the MAC CE in a MAC PDU, and determining, based on the quantity of occurrences, whether the MAC CE is used to indicate blind detection in a cell, wherein a fixed bit corresponding to each of the serving cells in the MAC CE is used to indicate whether the DCI needs to be blindly detected in the corresponding cell, and a value of a reserved bit in the MAC CE is used to indicate whether the DCI is to be blindly detected in the PCell.

7. A method for blindly detecting a physical downlink control channel, comprising:
sending, by a base station, configuration information to UE, wherein the configuration information is used to indicate a first cell in which downlink control information DCI does not need to be blindly detected and a second cell in which the DCI needs to be blindly detected in serving cells corresponding to the UE; and
sending, by the base station, the DCI to the UE in the second cell, so that the UE performs uplink transmission in the first cell based on the received DCI.

8. The method according to claim 7, wherein the sending, by a base station, configuration information to UE comprises:
sending the configuration information to the UE by adding the configuration information to a Media Access Control control element MAC CE message or cell index information in a radio resource control RRC message.

9. The method according to claim 8, wherein when the serving cells do not comprise a PCell, the adding the configuration information to a Media Access Control control element MAC CE message comprises:
adding, to a reserved bit in the MAC CE, information used to indicate whether the MAC CE indicates blind detection in a cell; and
establishing a correspondence between each of the serving cells and each fixed bit in the MAC CE, wherein a value of each fixed bit in the MAC CE is used to indicate whether the DCI needs to be blindly detected in the corresponding cell.

10. The method according to claim 8, wherein when the serving cells do not comprise a PCell, the adding the configuration information to a Media Access Control control element MAC CE message comprises:
storing one or more same MAC CEs in a Media Access Control protocol data unit MAC PDU based on whether the MAC CE is used to indicate blind detection in a cell; and
establishing a correspondence between each of the serving cells and each bit in the MAC CE, wherein a value of each bit in the MAC CE is used to indicate whether the DCI needs to be blindly detected in the corresponding cell.

11. The method according to claim 8, wherein when the serving cells comprise a PCell, the adding the configuration information to a Media Access Control control element MAC CE message comprises:
storing one or more same MAC CEs in a Media Access Control protocol data unit MAC PDU based on whether the MAC CE is used to indicate blind detection in a cell; and
establishing a correspondence between each of the serving cells and each bit in the MAC CE, wherein a value of each fixed bit in the MAC CE is used to indicate whether the DCI needs to be blindly detected in a corresponding cell, and a value of a reserved bit in the MAC CE is used to indicate whether the DCI is to be blindly detected in the PCell.

12. User equipment, comprising:
a receiver, configured to: receive configuration information sent by a base station, and receive the downlink control information DCI sent by the base station in a second cell, wherein the configuration information indicates a first cell in which the DCI does not need to be blindly detected and the second cell in which the DCI needs to be blindly detected in serving cells corresponding to the UE; and
a processor, configured to perform uplink transmission in the first cell based on the received DCI.

13. The user equipment according to claim 12, wherein the receiver is specifically configured to receive a Media Access Control MAC message or a radio resource control RRC message sent by the base station; and
the processor is further configured to obtain, from the MAC message or the RRC message, the configuration information sent by the base station.

14. The user equipment according to claim 12, wherein the processor is specifically configured to obtain the configuration information from cell index information in the RRC message or a Media Access Control control element MAC CE in the MAC message.

15. The user equipment according to claim 14, wherein when the configuration information is obtained from the MAC CE, and the serving cells do not comprise a primary serving cell PCell, the processor is specifically configured to: determine, based on a reserved bit in the received MAC CE, whether the MAC CE is used to indicate blind detection in a cell; and if the MAC CE is used to indicate blind detection in a cell, determine, based on a fixed bit corresponding to each of the serving cells in the MAC CE, the first cell in which the DCI does not need to be blindly detected and the second cell in which the DCI needs to be blindly detected.

16. The user equipment according to claim 14, wherein when the configuration information is obtained from the MAC CE, and the serving cells do not comprise a PCell, the processor is specifically configured to:
determine a quantity of occurrences of the MAC CE in a Media Access Control protocol data unit MAC PDU; determine, based on the quantity of occurrences, whether the MAC CE is used to indicate blind detection in a cell; and if the MAC CE is used to indicate blind detection in a cell, determine, based on a bit corresponding to each of the serving cells in the MAC CE, the first cell in which the DCI does not need to be blindly detected and the second cell in which the DCI needs to be blindly detected.

17. The user equipment according to claim 14, wherein when the configuration information is obtained from the MAC CE, and the serving cells comprise a PCell, the processor is specifically configured to: determine a quantity of occurrences of the MAC CE in a MAC PDU; determine, based on the quantity of occurrences, whether the MAC CE is used to indicate blind detection in a cell; and if the MAC CE is used to indicate blind detection in a cell, determine, based on a fixed bit corresponding to each of the serving cells in the MAC CE, the first cell in which the DCI does not need to be blindly detected and the second cell in which the DCI needs to be blindly detected, wherein a value of a reserved bit in the MAC CE is used to indicate whether the DCI is to be blindly detected in the PCell.

18. Abase station, comprising:
a processor, configured to generate configuration information, wherein the configuration information is used to indicate a first cell in which downlink control information DCI does not need to be blindly detected and a second cell in which the DCI needs to be blindly detected in serving cells corresponding to the UE, and the DCI is used to indicate uplink transmission of the UE; and
a transmitter, configured to: send the configuration information to the UE, and send the DCI to the UE in the second cell, so that the UE performs uplink transmission in the first cell based on the received DCI.

19. The base station according to claim 18, wherein the processor is specifically configured to add the configuration information to a Media Access Control control element MAC CE message or cell index information in a radio resource control RRC message.

20. The base station according to claim 19, wherein when the serving cells do not comprise a PCell, the processor is specifically configured to: add, to a reserved bit in the MAC CE, information used to indicate whether the MAC CE indicates blind detection in a cell; and establish a correspondence between each of the serving cells and each fixed bit in the MAC CE, wherein a value of each fixed bit is used to indicate whether the DCI needs to be blindly detected in the corresponding cell.

21. The base station according to claim 19, wherein when the serving cells do not comprise a PCell, the processor is specifically configured to: store one or more same MAC CEs in a Media Access Control protocol data unit MAC PDU based on whether the MAC CE is used to indicate blind detection in a cell; and establish a correspondence between each of the serving cells and each bit in the MAC CE, wherein a value of each bit in the MAC CE is used to indicate whether the DCI needs to be blindly detected in the corresponding cell.

22. The base station according to claim 19, wherein when the serving cells comprise a PCell, the processor is specifically configured to: store one or more same MAC CEs in a Media Access Control protocol data unit MAC PDU based on whether the MAC CE is used to indicate blind detection in a cell; and establish a correspondence between each of the serving cells and each fixed bit in the MAC CE, wherein a value of each fixed bit is used to indicate whether the DCI needs to be blindly detected in a corresponding cell, and a value of a reserved bit in the MAC CE is used to indicate whether the DCI is to be blindly detected in the PCell.
